# NEUE EUROPÄISCHE PATENTSCHRIFT

(11) **EP 1 258 110 B2**
(45) Veröffentlichungstag und Bekanntmachung des Hinweises auf die Entscheidung über den Einspruch: **16.01.2013**
(45) Hinweis auf die Patenterteilung: 09.03.2005
(21) Anmeldenummer: 01913559.9
(22) Anmeldetag: 02.02.2001
(51) Int. Cl.: H04L 12/28, H04L 12/70

(54) **VERFAHREN ZUR BIDIREKTIONALEN DATENÜBERTRAGUNG ÜBER EINE PAKETORIENTIERTE NETZWERKEINRICHTUNG**
METHOD FOR THE BI-DIRECTIONAL TRANSMISSION OF DATA VIA A PACKET-ORIENTED NETWORK DEVICE
PROCEDE DE TRANSMISSION BIDIRECTIONNELLE DE DONNEES PAR L'INTERMEDIAIRE D'UN DISPOSITIF DE RESEAU ORIENTE PAQUETS

(30) Priorität: 16.02.2000 DE 10007012
(43) Veröffentlichungstag der Anmeldung: 20.11.2002
(73) Patentinhaber: IPCom GmbH & Co. KG, 82049 Pullach (DE)
(72) Erfinder: HANS, Martin, 31141 Hildesheim (DE); KOWALEWSKI, Frank, 38228 Salzgitter (DE); LAUMEN, Josef, 31141 Hildesheim (DE); SCHMIDT, Gunnar, 38304 Wolfenbuettel (DE); BAER, Siegfried, 75179 Pforzheim (DE); BECKMANN, Mark, 31789 Hameln (DE)
(74) Vertreter: Schneider, Günther Martin
(86) Internationale Anmeldenummer: PCT/DE2001/000390
(87) Internationale Veröffentlichungsnummer: WO 2001/061957

(56) Entgegenhaltungen:
- WO-A-98/47256
- WO-A-99/43133
- WO-A-99/56445
- WO-A2-96/21984
- HAEMAELAEINEN J ET AL: "PROPOSED OPERATION OF GSM PACKET RADIO NETWORKS" IEEE INTERNATIONAL SYMPOSIUM ON PERSONAL, INDOOR AND MOBILE RADIO COMMUNICATIONS,XX,XX, Bd. 1, 27. September 1995 (1995-09-27), Seiten 372-377, XP000645965

## Beschreibung

### STAND DER TECHNIK

Die vorliegende Erfindung betrifft ein Verfahren zur bidirektionalen Datenübertragung eines Datensatzes zwischen einer Datensende- und einer Datenempfangseinrichtung über mindestens eine paketorientierte Netzwerkeinrichtung.

Obwohl auf beliebige Telekommunikationseinrichtungen anwendbar, werden die vorliegende Erfindung, sowie die ihr zugrundeliegende Problematik in Bezug auf eine Funkverbindung in Mobilfunk-Systemen erläutert.

Es existieren grundsätzlich zwei verschiedene Arten der Datenübertragung. Dies ist einerseits die verbindungsvermittelte bzw. - orientierte Übertragung und andererseits die paketvermittelte bzw.- orientierte Datenübertragung.

Bei der verbindungsorientierten Datenübertragung besteht zwischen der Datensendeeinrichtung, insbesondere ein Modem oder ein Mobiltelefon, und der Datenempfangseinrichtung eine permanente Verbindung, über die der Datentransfer stattfindet. Diese Verbindung wird zu Beginn aufgebaut, z.B. über ein Mobilfunknetz, und nach erfolgter Datenübertragung wieder beendet.

Bei der paketorientierten Datenübertragung sind die Datensende- und die Datenempfangseinrichtung nicht direkt nur über eine Verbindung miteinander verbunden, sondern über mindestens ein Netzwerk, das von mehreren Datensende- und Datenempfangseinrichtugen benutzt wird. Die auszutauschenden Daten werden für eine Datenübertragung in Pakete zusammen- gefasst und über eine zugefügte Addressinformation von der Datensendeeinrichtung zur Datenempfangseinrichtung geleitet. Somit sind Datenpakete von unterschiedlichen Datensende- und Datenempfangseinrichtungen über ein identisches Übertragungsgsmedium übertragbar. Es bestehen hier nur sogenannte logische Verbindungen.

Der Vorteil der oben erwähnten verbindungsorientierten Datenübertragung besteht darin, dass einem entsprechenden Anwender oder einer entsprechenden Einrichtung zu jeder Zeit eine garantierte Datenübertragungskapazität zur Verfügung steht.

Die Vorteile der ebenfalls oben erwähnten paketorientierten Datenübertragung liegen in einer besseren Datenübertragungseffizienz zwischen dem Datenaufkommen und der Datenübertragungskapazität, d.h. wird die Datenübertragungskapazität durch eine logische Verbindung nicht ausgeschöpft, so kann die verbleibende Kapazität durch andere logische Verbindungen genutzt werden.

Somit werden üblicherweise Sprachübertragungsdienste fast ausschließlich mit Hilfe der verbindungsorientierten Datenübertragung bereit gestellt, während Dienste aus den Bereichen der Informationstechnik, wie z.B. Computervernetzung oder Internetzugriff, eine paketorientierte Datenübertragung nutzen.

Die Netzwerke Public Switched Telephone Network (PSTN), Integrated Service Digital Network (ISDN) und das Global System for Mobile Communication (GSM) bieten verbindungsorientierte Dienste, wie z.B. für Sprachübertragung, Faxübertragung etc. an.

Dagegen bieten z.B. die Netzwerke Local Area Network (LAN) und Wide Area Network (WAN) paketorientierte Dienste an. Zu diesen kommt das Netzwerk General Packet Radio Service (GPRS) als Ergänzung zum Netzwerk Global System for Mobile Communication (GSM), wobei das GPRS paketorientierte Dienste vom Dienstanbieter, z.B. aus dem Internet, über den Netzwerkbetreiber und z.B. einer Funkverbindung bis zu einem mobilen Terminal ermöglicht. Das Dokument "Proposed operation of GSM Packet Radio Networks" by Haemaelaeinen et al., IEEE INTERNATIONAL SYMPOSIUM ON PERSONAL, INDOOR AND MOBILE RADIO COMMUNICATIONS, Bd. 1, 27 September 1995, Seiten 372-377, beschreibt eine Architektur, eine Signalisierung sowie Protokolle für ein GPRS-Netzwerk.

Die der vorliegenden Erfindung zugrundeliegenden Problematik besteht allgemein darin, eine Möglichkeit einer direkten Nutzung von paketorientierten Netzwerken durch den Anwender (User) zu schaffen, auch wenn ein Teil verbindungsorientiert vermittelt wird.

Momentan findet sich im Stand der Technik folgender Ansatz zur Lösung dieses Problems.

Es bestehen üblicherweise über verbindungsorientierte Dienste Einwahlmöglichkeiten, wie z.B. eine Modemverbindung über das PSTN, die z.B. über einen Personal Computer oder Laptop über z.B. einen Internet Service Provider (ISP) den Zugang zum Internet bietet. Für den Personal Computer bzw. Laptop besteht im Vergleich zum direkten paketorientierten Netzwerkanschluß kein Unterschied, da die Datenübertragungspakete "eingekapselt", d.h. mittels einem Datenprotokoll verpackt, über das verbindungsorientierte Netzwerk übertragbar sind. Bekannte Protokolle für diese "Einkapselung" der Datenübertragungspakete sind z.B. Point-to-Point Protocol (PPP) oder Serial Line Internet Protocol (SLIP). Diese Protokolle werden beim Anwender den zu übertragenden Datenpaketen zugewiesen und an einem Einwählknoten, z.B. beim Internet Service Provider entnommen.

Als nachteilhaft bei obigem Ansatz hat sich die Tatsache herausgestellt, das die Netzwerkbetreiber, die sowohl paket- als auch verbindungsorientierte Dienste anbieten, uneinheitliche Adressierungsmechanismen sowie eine uneffiziente Datenübertragung zur Verfügung stellen müssen, da sie Paketdaten verbindungsorientiert zum beispielsweise Internet Service Provider (ISP) übertragen müssen, obwohl u.U. eine paketorientierte Vermittlung vorhanden ist.

### VORTEILE DER ERFINDUNG

Das erfindungsgemäße Verfahren mit den Merkmalen des Anspruchs 1 weist gegenüber dem bekannten Lösungsansatz den Vorteil auf, dass in dem internen Netz der entsprechenden Netzwerkeinrichtung die zu übertragenden Daten ausschließlich paketorientiert übertragen werden.

Die der vorliegenden Erfindung zugrundeliegende Idee besteht darin, dass das Verfahren zur bidirektionalen Datenübertragung eines Datensatzes zwischen einer Datensendeund einer Datenempfangseinrichtung über mindestens eine paketorientierte Netzwerkeinrichtung, wobei verbindungsorientiert vermittelt wird, folgende Schritte beinhaltet:
Zuweisen eines Dateneinkapselungsprotokolls dem verbindungsorientiert zu übertragenden Datensatz in der Datensendeeinrichtung oder einem externen Datenendgerät, das mit der Datensendeeinrichtung verbunden ist, für eine Einkapselung des Datensatzes zum Ermöglichen einer verbindungsorientierten Datenübertragung des Datensatzes;
verbindungsorientiertes Übertragen des eingekapselten Datensatzes mittels mindestens einer Telekommunikationseinrichtung von der Datensendeeinrichtung an die paketorientierte Netzwerkeinrichtung;
Auswerten des Dateneinkapselungsprotokolls in der paketorientierten Netzwerkeinrichtung für eine Entpackung des Datensatzes zum Ermöglichen einer paketorientierten Datenübertragung des Datensatzes; und
paketorientiertes Übertragen des Datensatzes von der paketorientierten Netzwerkeinrichtung an die Datenempfangseinrichtung, wobei als Verbindungsmedium der Telekommunikationseinrichtung für eine Übertragung des Datensatzes von der Datensendeeinrichtung an die paketorientierte Netzwerkeinrichtung ein Mobilfunknetz verwendet wird, und wobei die Auswertung des Dateneinkapselungsprotokolls in einer RNC (Radio Network Controller) - Einrichtung der Telekommunikationseinrichtung ausgeführt wird.

Dieses bietet Netzwerkbetreibern, wie oben bereits erwähnt, den Vorteil, im internen Netz die Daten ausschließlich paketvermittelt übertragen zu können. Somit genügt ein einheitlicher Adressierungsmechanismus. Ferner kann aufgrund der paketorientierten Datenübertragung die Datenübertragungseffizienz aufgrund einer besseren Ausnutzung der Datenübertragungskapazität erhöht werden.

Außerdem werden die zu übertragenden Datenpakete optimaler vermittelt bzw. geroutet, falls der Betreiber der Netzwerkeinrichtung und der Internet Service Provider identisch sind.

Ferner erlaubt die rein paketorientierte Datenübertragung über die Netzwerkeinrichtung unterschiedliche Abrechnungsmodelle. So sind neben der Verbindungszeit ebenso das Datenaufkommen, die Anzahl der Datenpakete, eine Abrechnung nach Art oder Verwendung der Datenpakete etc. bzw. ein mit dem durchgängigen Paketmodusäquivalenten Abrechnungsmodell vorstellbar.

Erfindungsgemäß wird als Verbindungsmedium der Telekommunikationseinrichtung für eine Übertragung des Datensatzes von der Datensenderichtung an die paketorientierte Netzwerkeinrichtung ein Mobilfunknetz verwendet. Somit findet der Datenaustausch z.B. zwischen einem Mobiltelefon und einem Internet Service Provider über ein Funknetz statt.

Erfindungsgemäß wird die Auswertung des Dateneinkapselungprotokolls in einer Radio Network Controller (RNC) - Einrichtung der paketorientierten Netzwerkeinrichtung ausgeführt. Dadurch wird gewährleistet, das schon zu Beginn der Netzwerkeinrichtung und fortlaufend über die gesamte Netzwerkeinrichtung eine paketorientierte Datenübertragung stattfindet. Somit kann vom Betreiber der Netzwerkeinrichtung nur eine Datenprotokollanpassung vorgenommen werden.

Gemäß einer bevorzugten Weiterbildung wird von der Telekommunikationseinrichtung sowohl eine verbindungs- als auch eine paketorientierte Datenübertragung unterstützt. Dadurch besitzt der Netzwerkbetreiber, z.B. in Abhängigkeit seiner Funkstrecken-Resourcen bzw. seiner Auslastung die Möglichkeit, den selben Dienst entweder verbindungs- oder paketorientiert über eine Luftschnittstelle zu übertragen.

So könnte es bei paketorientierten Real Time Multi Media Diensten, z.B. ITU-T H.323, im Falle einer hohen Paketnutzung über die Luftschnittstelle sinnvoll sein, für einen solchen Dienst auf den Paket-Modus über eine verbindungsorientierte Luftschnittstelle auszuweichen bzw. dynamisch umzuschalten.

Gemäß einer weiteren bevorzugten Weiterbildung wird von der Datensendeeinrichtung sowohl eine verbindungs- als auch eine paketorientierte Datenübertragung unterstützt.

Datenendgeräte, insbesondere ein Modem oder ein Mobiltelefon, die eine paketorientierte Datenübertragung unterstützen, sind aufgrund einer aufwendigeren Struktur kostspieliger. Somit können Endgeräte mit nicht paketfähiger Luftschnittstelle wie z.B. Low-End/Low-Cost Terminals identische Leistungsmerkmale aufweisen wie Datenendgeräte mit paketfähiger Luftschnittstelle. Aus Sicht der Applikation besteht hierbei kein Unterschied zum durchgehenden Paketdienst. Würde jedoch, wie oben beschrieben, zwischen den beiden Übertragungsarten umgeschaltet werden, müssen die Datenendgeräte sowohl eine verbindungs- als auch eine paketorientierte Datenübertragung unterstützen.

Gemäß einer weiteren bevorzugten Weiterbildung ist das externe Datenendgerät insbesondere als Personal Computer oder Laptop ausgebildet.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein Blockschaltbild einer Netzwerkarchitektur und einer Protokollstruktur für einen durchgängigen Paket-Modus nach dem Stand der Technik;
- Fig. 2: ein Blockschaltbild einer Netzwerkarchitektur und einer Protokollstruktur für einen Paket-Modus über eine verbindungsorientierte Luftschnittstelle gemäß einer Ausführungsform der vorliegenden Erfindung; und
- Fig. 3: ein Blockschaltbild einer Netzwerkarchitektur und einer Protokollstruktur für einen kombinierten Paket-Modus über eine verbindungsorientierte oder durchgängig paketorientierte Luftschnittstelle gemäß einer Ausführungsform der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten.

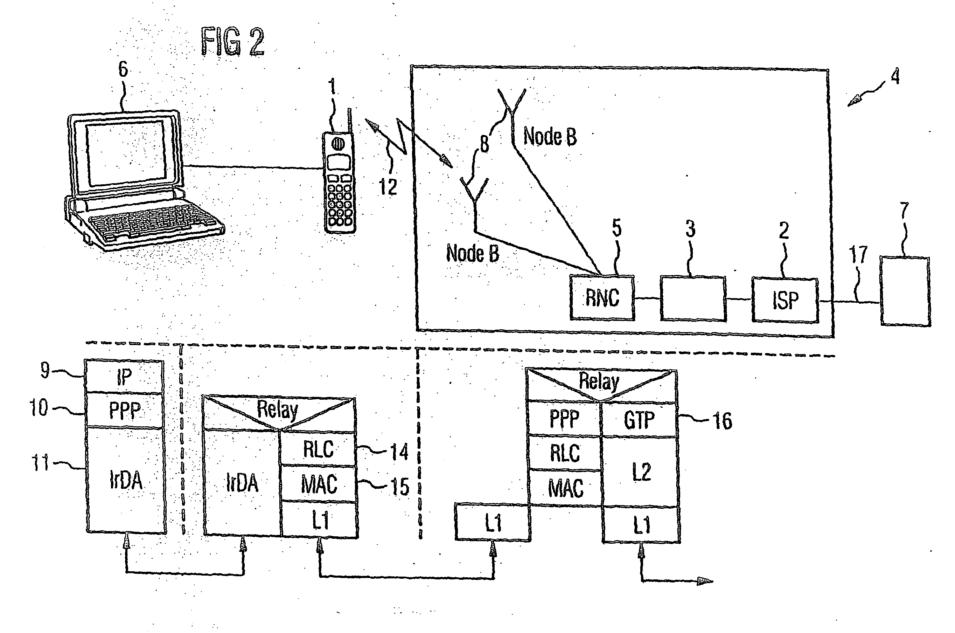

Fig. 2 zeigt ein Blockschaltbild der an einer bidirektionalen Datenübertragung gemäß einem Ausführungsbeispiel der vorliegenden Erfindung beteiligten Komponenten sowie die relevanten Protokollelemente.

In diesem Ausführungsbeispiel werden die zu übertragenden Daten in einem Laptop 6, alternativ ein Personal Computer, durch ein Internet Protokoll (IP) 9 und ein Point-to-Point Protocol (PPP) 10 eingepackt, wobei das IP-Protokoll 9 für einen verbindungslosen Transport der Daten von dem Personal Computer 6 über mindestens ein Netz zu einer Datenempfangseinrichtung 7, in dem vorliegenden Fall über einen Internet Service Provider 2 über das Internet, zuständig ist. Das IP-Protokoll 9 ist auf Schicht 3 des OSI-Referenzmodells angeordnet.

Das PPP-Protokoll 10 liegt auf Schicht 2 des OSI-Protokolls und dient einem seriellen Datentransfer über Wählverbindungen. Das PPP-Protokoll 10 packt gewissermaßen den zu übertragenden Datensatz für eine Einkapselung desselben ein, um so eine Datenübertragung über eine verbindungsorientierte Vermittlung zu ermöglichen. Bei einer paketorientierten Datenübertragung ist eine solche Einpackung des Datensatzes mittels dem PPP-Protokoll 10 nicht notwendig. Das Dateneinkapselungsprotokoll 10 wird im Laptop 6 dem verbindungsorientiert zu übertragenden Datensatz zugewiesen.

Der Laptop 6 ist über eine serielle Infrarotschnittstelle (IrDA) 11 mit einem mobilen Terminal 1, in dem vorliegenden Beispiel ein Mobiltelefon 1, verbindbar. Über diese Infrarotschnittstelle 11 wird der eingekapselte bzw. eingepackte Datensatz vom Laptop 6 an das Mobiltelefon 1 übertragen.

Der eingepackte Datensatz durchläuft im Mobiltelefon 1 weitere Protokollstrukturen, wie z.B. das Radio Link Control-Protocol (RLC-Protokoll) 14, das die logischen Kanäle kontrolliert, und das Media Access Control Protocol (MAC-Protokoll) 15, das eine Unterschicht der Schicht 2 des OSI-Referenzmodells darstellt und den Zugriff auf ein Übertragungsmedium nach verschiedenen Strategien regelt. Der eingekapselte Datensatz wird nun von dem Mobiltelefon 1 über eine Luftschnittstelle 12 bzw. ein Mobilfunknetz verbindungsorientiert an eine Basisstation 8 (Node B) des Telekommunikationsdienstes 4 übertragen. Es besteht dabei zwischen dem Mobiltelefon 1 und der Basisstation 8 bzw. der mit der Basisstation 8 verbundenen Netzwerkeinrichtung 3 eine permanente Verbindung, über die der Datentransfer stattfindet. Damit wird zu jeder Zeit eine bestimmte Datenübertragungskapazität gewährleistet.

Zum Ermöglichen eines einheitlichen Adressierungsmechanismus sollen die Daten nicht als verpackte Daten verbindungsorientiert und als unverpackte Daten paketorientiert über das Netzwerk 3 als zwei verschiedene Übertragungsarten an einen Internet Service Provider (ISP) 2 vermittelt werden. Es besteht also bis zum Radio Network Controller (RNC) 5 eine rein verbindungsorientierte Datenübertragungsverbindung wie bei den klassischen Sprachdiensten. In dem vorliegenden Ausführungsbeispiel der vorliegenden Erfindung werden sämtliche Daten über die Netzwerkeinrichtung 3 wie beim Paketmodus paketorientiert übertragen. Hierfür wird das Dateneinkapselungsprotokoll 10, also das PPP-Protokoll 10, für eine Entpackung des verpackten Datensatzes in dem Radio Network Controller 5 bzw. wahlweise in der Basisstation 8 bereits ausgewertet bzw. terminiert.

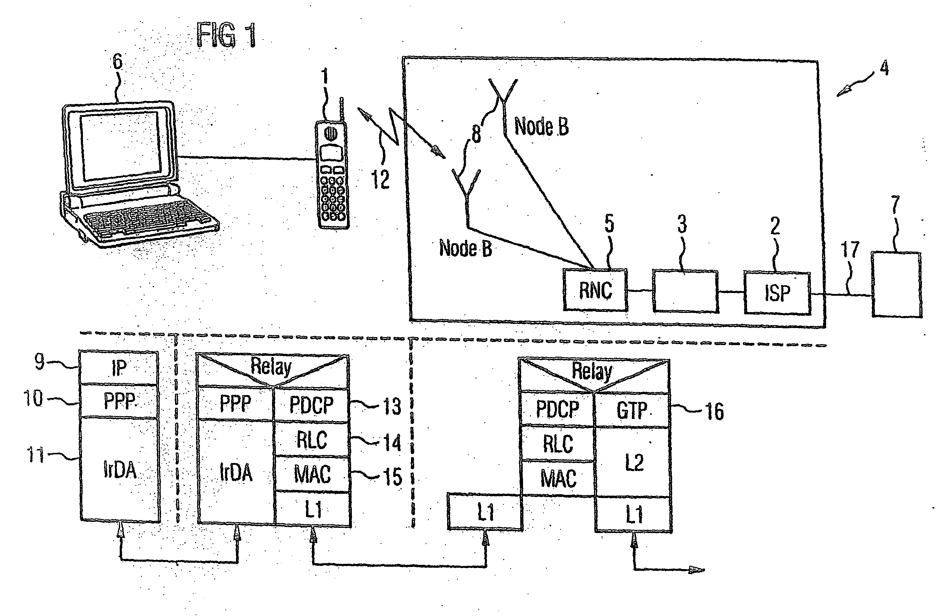

Die Umsetzung von der verbindungs- zur paketorientierten Datenübertragung wird im Radio Network Controller 5 beim Übergang in das GPRS Tunneling Protocol (GTP) 16, wobei GPRS die Abbreviation für General Paket Radio Service ist, ausgeführt. Dadurch sind sämtliche Daten über die gesamte Netzwerkeinrichtung 3 rein paketorientiert übertragbar. Im Vergleich zur üblichen paketorientierten Datenübertragung, wie in Fig. 1 dargestellt, ersetzt die Auswertung des PPP-Protokolls 10 das Packet Data Convergency Protocol (PDCP) 13 im Radio Network Controller 5, welches für den durchgängigen Paket-Modus notwendig ist.

Danach wird der entpackte Datensatz paketorientiert von der paketorientierten Netzwerkeinrichtung 3 mittels einem Internet Service Provider (ISP) 2 über ein Paketnetz, z. B. das Internet, an einen Zielempfänger 7 übertragen.

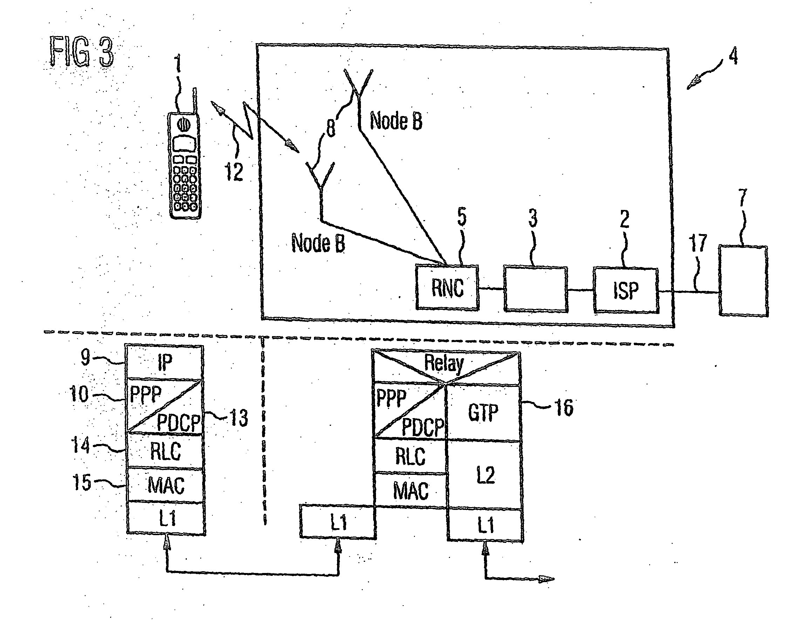

Fig. 3 zeigt ein Blockdiagramm der an der Datenübertragung beteiligten Komponenten sowie der betreffenden Protokollstruktur für einen kombinierten Paket-Modus, wobei wahlweise verbindungs- oder durchgängig paketorientiert über die Luftschnittstelle 12 übertragen werden kann. Hierbei besitzen die einzelnen Komponenten sowie die entsprechenden Protokollelemente die bereits oben erwähnten Funktionalitäten.

Anders als im vorher erwähnten Ausführungsbeispiel wird hier das Internet Protokoll direkt im Mobiltelefon 1 ausgeführt. Somit ist kein externer Laptop bzw. Computer 6 für eine Initiierung des PPP-Protokolls 10 notwendig. Hingegen ist das notwendige PPP-Protokollelement 10 integraler Bestandteil des aus mehreren Schichten bestehenden Protokollstacks im Mobiltelefon 1.

Außerdem unterstützt das Mobiltelefon 1 in diesem Ausführungsbeispiel sowohl eine durchgängige Paketdatenübertragung, wie in Fig. 1 gemäß dem Stand der Technik dargestellt, als auch den Paket-Modus über die verbindungsorientierte Luftschnittstelle 12.

Dies wird in Fig. 3 durch das gemeinsame Auftreten der Protokollelemente Point-to-Point Protocol (PPP) 10 und Packet Data Convergency Protocol (PDCP) 13 verdeutlicht. Denn einerseits ist eine Einkapselung des zu übertragenden Datensatzes mittels des PPP-Protokolls 10 für eine verbindungsorientierte Datenübertragung des verpackten Datensatzes, andererseits für eine paketorientierte Datenübertragung eines Datensatzes das Protokollelement PDCP 13 notwendig.

Für den Anwender besteht kein Unterschied zwischen diesen beiden Übertragungsarten, jedoch besitzt der Netzwerkbetreiber die Möglichkeit, in Abhängigkeit seiner Funkstrecken-Resourcen bzw. seiner Auslastung denselben Dienst entweder verbindungs- oder paketorientiert über die Luftschnittstelle 12 anzubieten bzw. auszuführen. Damit kann es z.B. bei einer paketorientierten Datenübertragung im Falle einer hohen Paketnutzung bzw. Datenmenge über die Luftschnittstelle 12 nützlich sein, auf den Paket-Modus über eine verbindungsorientierte Luftschnittstelle auszuweichen bzw. zwischen diesen beiden Modi umzuschalten. Dafür muß sowohl von der Datensendeeinrichtung 1 als auch von der Telekommunikationseinrichtung 4 sowohl eine verbindungs- als auch eine paketorientierte Datenübertragung unterstützt werden.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere lassen sich anstatt der gängigen in diesen Ausführungsbeispielen der vorliegenden Erfindung beschriebenen Protokollelemente mit gleicher Funktionalität verwenden.

So ist zum Beispiel das Einkapselungsprotokoll auch durch ein Serial Line Internet Protocol (SLIP) oder die Verbindung durch eine Bluetooth-Schnittstelle oder eine Personal Computer Memory Card International Association (PCMCIA)-Verbindung realisierbar.

## Patentansprüche

1. Verfahren zur bidirektionalen Datenübertragung eines Datensatzes zwischen einer Datensende- (1) und einer Datenempfangseinrichtung (7) über mindestens eine paketorientierte Netzwerkeinrichtung (3), wobei verbindungsorientiert vermittelt wird, mit folgenden Schritten:
Zuweisen eines Dateneinkapselungsprotokolls (10) dem verbindungsorientiert zu übertragenden Datensatz in der Datensendeeinrichtung (1) oder einem externen Datenendgerät (6), das mit der Datensendeeinrichtung (1) verbunden ist, für eine Einkapselung des Datensatzes zum Ermöglichen einer verbindungsorientierten Datenübertragung des Datensatzes; verbindungsorientiertes Übertragen des eingekapselten Datensatzes mittels mindestens einer Telekommunikationseinrichtung (4) von der Datensendeeinrichtung (1) an die paketorientierte Netzwerkeinrichtung (3);
Auswerten des Dateneinkapselungsprotokolls (10) in der paketorientierten Netzwerkeinrichtung (3) für eine Entpackung des Datensatzes zum Ermöglichen einer paketorientierten Datenübertragung des Datensatzes; und
paketorientiertes Übertragen des Datensatzes von der paketorientierten Netzwerkeinrichtung (3) an die Datenempfangseinrichtung (7);
wobei als Verbindungsmedium der Telekommunikationseinrichtung (4) für eine Übertragung des Datensatzes von der Datensendeeinrichtung (1) an die paketorientierte Netzwerkeinrichtung (3) ein Mobilfunknetz verwendet wird, und
wobei die Auswertung des Dateneinkapselungsprotokolls (10) in einer RNC (Radio Network Controller) - Einrichtung (5) der Telekommunikationseinrichtung (4) ausgeführt wird.

2. Verfahren nach Anspruch 1, **dadurch gekennzeichnet, dass** von der Telekommunikationseinrichtung (4) sowohl eine verbindungs- als auch eine paketorientierte Datenübertragung unterstützt wird.

3. Verfahren nach einem der vorhergehenden Ansprüche, **dadurch gekennzeichnet, dass** von der Datensendeeinrichtung (1) sowohl eine verbindungs- als auch eine paketorientierte Datenübertragung unterstützt wird.

4. Verfahren nach einem der vorhergehenden Ansprüche, **dadurch gekennzeichnet, dass** das externe Datenendgerät (6) insbesondere als Personal Computer oder Laptop ausgebildet ist.

## Claims

1. Method for bi-directional data transmission of a data record between a data transmission device (1) and a data reception device (7) using at least one packet-oriented network device (3), with switching being performed on a connection-oriented basis, having the following steps:
a data encapsulation protocol (10) is assigned to the data record which is to be transmitted on a connection-oriented basis in the data transmission device (1) or in an external data terminal (6) which is connected to the data transmission device (1) in order to encapsulate the data record so as to allow connection-oriented data transmission of the data record; the encapsulated data record is transmitted on a connection-oriented basis from the data transmission device (1) to the packet-oriented network device (3) using at least one telecommunication device (4);
the data encapsulation protocol (10) is evaluated in the packet-oriented network device (3) in order to unpack the data record so as to allow packet-oriented data transmission of the data record; and
the data record is transmitted on a packet-oriented basis from the packet-oriented network device (3) to the data reception device (7);
wherein the connection medium used by the telecommunication device (4) for the purpose of transmitting the data record from the data transmission device (1) to the packet-oriented network device (3) is a mobile radio network, and
wherein the data encapsulation protocol (10) is evaluated in an RNC (Radio Network Controller) device (5) in the telecommunication device (4).

2. Method according to Claim 1, **characterized in that** the telecommunication device (4) supports both connection-oriented and packet-oriented data transmission.

3. Method according to either of the preceding claims, **characterized in that** the data transmission device (1) supports both connection-oriented and packet-oriented data transmission.

4. Method according to one of the preceding claims, **characterized in that** the external data terminal (6) is in the form of a personal computer or laptop, in particular.

## Revendications

1. Procédé de transmission bidirectionnelle de données d'un jeu de données entre une installation d'émission de données (1) et une installation de réception de données (7) par au moins une installation de réseau (3) à communication par paquets, avec transmission par liaison orientée comprenant les étapes suivantes :
- attribution d'un protocole d'emballage de données (10) au jeu de données à transmettre par liaison orientée à l'installation d'émission de données (1) ou à un terminal de données, externe (6) relié à l'installation d'émission de données (1), pour emballer le jeu de données et permettre sa transmission par une liaison orientée,
- transmission du jeu de données emballées en liaison orientée à l'aide d'au moins une installation de télécommunication (4) de l'installation d'émission de données (1) à l'installation de réseau (3) à communication par paquets,
- exploitation du protocole d'emballage de données (10) dans l'installation de réseau à communication par paquets (3) pour mettre en paquets le jeu de données et permettre une transmission du jeu de données en communication par paquets,
- transmission du jeu de données en communication par paquets par l'installation de réseau (3) à communication par paquets vers l'installation de réception de données (7), dans lequel le moyen de liaison de l'installation de télécommunication (4) pour la transmission du jeu de données par l'installation d'émission de données (1) à l'installation de réseau à communication par paquets (3) est un réseau de radio mobile, et l'exploitation du protocole d'emballage de données (10) est faite dans un contrôleur de réseau radio (5), (RNC), de l'installation de télécommunication (4).

2. Procédé selon la revendication 1, **caractérisé en ce que** l'installation de télécommunication (4) soutient une liaison et une transmission de données par paquets.

3. Procédé selon l'une des revendications précédentes, **caractérisé en ce que** l'installation d'émission de données (1) soutient une liaison et une transmission de données par paquets.

4. Procédé selon l'une des revendications précédentes, **caractérisé en ce que** le terminal externe (6) pour les données est notamment un ordinateur personnel ou un ordinateur portable ou bloc-notes.
